# EUROPEAN PATENT APPLICATION

(11) **EP 1 988 460 A1**
(43) Date of publication of application: **05.11.2008**
(21) Application number: 08251423.3
(22) Date of filing: 14.04.2008
(51) Int. Cl.: G06F 9/46, G06F 9/48

(54) **Apparatus for and method of distributing instructions**

(30) Priority: 02.05.2007 US 799638
(71) Applicant: MediaTek Inc., 1st Science-Based Industrial Park Hsin-Chu 300 (TW)
(72) Inventor: Soerensen, Joern, Dk 9600 Aars (DE); Muthukrishnan, Dilip, Cedar Park, TX 78613 (US); Plumb, William, CB4 3ER (US); Keller, Thomas, Cambridgeshire CB2 5FN (GB); Clark, Morag, ST Neots Cambridge PE19 7AL (GB)
(74) Representative: Beck, Simon Antony

(57) **Abstract**

An apparatus is provided for buffering instructions. An instruction store has memory locations for storing instructions. Each instruction can be associated with a timer such that an instruction dispatcher causes the instruction to be sent when the timer indicates that the instruction should be sent.

## Description

### FIELD OF THE INVENTION

The present invention relates to an apparatus for, and method of, buffering and relaying instructions to subsystems within an electronic device.

### BACKGROUND OF THE INVENTION

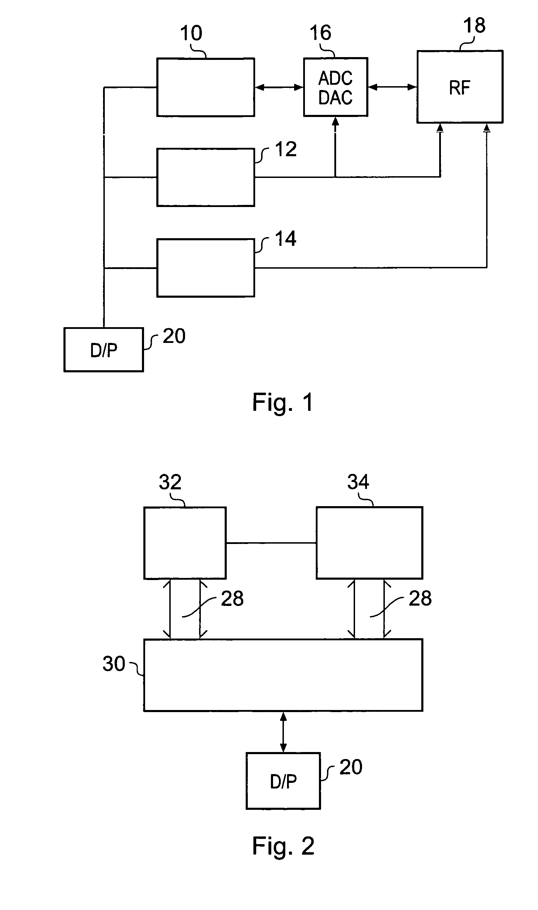

Some systems, such as mobile telephones and wireless datacards, are composed of various subsystems which need to be individually controlled in order to achieve the desired operation of the device. Some of the devices carry "legacy" architectures and instruction regimes which they need to support. Figure 1 shows, for example, an architecture within a GSM mobile phone where it is known to have a baseband controller, sometimes known as a baseband port 10 which controls the interchange between the baseband analog and baseband digital signals. It is also known for such a GSM telephone to include a control device 12, sometimes known as CSPORT, which handles control of local oscillator frequency, amplifier gain, sampling frequency, microphone gain and loudspeaker amplitude. Finally an RF controller 14, sometimes known as SYNTH PORT is provided which controls the RF amplifier gain in order to make sure that the mobile telephone functions within the regulatory parameters laid down for the use of such devices. It also controls frequency band selection, channel selection, receiver gain, filter parameters and so on. Each of the controllers 10, 12 and 14 acts as an interface between the specific analog to digital and digital to analog conversion circuitry 16 and the specific RF components 18 provided within the mobile telephone. The controllers receive their instructions from software executing within a programmable data processor 20 and provide a control interface between the programmable data processor 20 and the operative components of the mobile phone system.

It is also known that other control architectures can be employed in complex systems. Figure 2 schematically illustrates the interconnections within a UMTS (3G) telephone where a relatively wide databus 28, for example an 8 bit parallel databus, interfaces between a device controller 30, a baseband stage 32 and an RF stage 34. Use of a wide parallel bus allows rapid data transfer between the functional opponents albeit at the considerable expense of increased pin out on the devices. This is generally undesirable as there is generally a great premium to be paid for adding additional pins to a device, both in financial terms and package size.

UMTS mobile telephones need to support the GSM standard such that the mobile telephone can switch modes when moving from an area where the UMTS service is supported to an area where the UMTS service is not supported without interrupting the call. Consequently both the GSM and UMTS components are integrated within a single device.

### SUMMARY OF THE INVENTION

According to a first aspect of the present invention there is provided an instruction buffer comprising: a store for storing at least one instruction; a timer for issuing an indication that a specific instruction from the instruction store is due for execution; and an instruction dispatcher responsive to the timer for accessing the store to identify the instruction due for execution and for instructing a device responsive to the instruction buffer to execute the instruction.

It is thus possible to provide an instruction buffer which improves the controllability of a complex system. In particular it removes the pressure on a controller, for example a data processor acting in accordance with programmable software, to issue write instructions to various devices controlled by said data processor within a tight time frame.

According to a second aspect of the present invention there is provided an event controller for controlling a timing of a plurality of events that occur in one or more devices responsive to the event controller and which are in communication with the event controller, wherein the event controller is adapted to:
a. generate instructions identifying an event and a commencement time for the event;
b. to estimate a set up time representative of a time delay between commencing to send an instruction to a selected device and the selected device executing the instruction; and
c. to set a trigger time for issuing the instruction taking account of the set up time such that execution of the instruction starts in the selected device substantially at the commencement time.

According to a third aspect of the present invention there is provided a prioritised instruction buffer comprising a plurality of memory locations to which instructions can be written, at least one timer for causing an instruction to be retrieved from a memory location for transmission to a slave device, and a prioritiser for identifying a highest priority instruction for transmission in the event that a plurality of instructions fall due for transmission at substantially the same time.

According to a fourth aspect of the present invention there is provided a method of sending instructions from a controller to slave devices responsive to the controller, the method comprising: placing instructions for the devices in an instruction store capable of storing a plurality of instructions; setting a timer to issue an indication that a specific instruction in the instruction store is due for sending; and in response to a signal from the timer retrieving the instruction from the instruction store and sending it to the slave device.

According to a fifth aspect of the present invention there is provided a method of controlling the execution of a plurality of events in a system comprising a plurality of sub-systems, the method comprising the steps of:
a. generating instructions identifying an event and a commencement time for the event;
b. setting a timer to issue a signal when the event should be initiated; and
c. in response to the timer sending instructions to initiate the event.

### BRIEF DESCRIPTION OF THE DRAWINGS

The present invention will be described by way of non-limiting example only, with reference to the accompanying drawings in which:
Figure 1 schematically illustrates the interrelation between control circuitry and signal processing blocks within a GSM mobile telephone;
Figure 2 schematically illustrates the interrelation between control circuitry and processing blocks within a UMTS mobile telephone;
Figure 3 schematically illustrates the interconnections between control circuitry and processing blocks within a mobile device, such as mobile telephone, constituting an embodiment of the present invention;
Figure 4 schematically illustrates a structure for a data transfer word for use in a serial interface within the embodiment shown in Figure 3;
Figure 5 schematically illustrates an instruction buffer constituting an embodiment of the present invention;
Figure 6 is a timing diagram illustrating writing of an instruction using the serial interface of the embodiment shown in Figure 3;
Figure 7 is a timing diagram illustrating the writing of instructions to a sub-system; and
Figure 8 shows a further embodiment of an instruction buffer.

### DESCRIPTION OF PREFERRED EMBODIMENTS

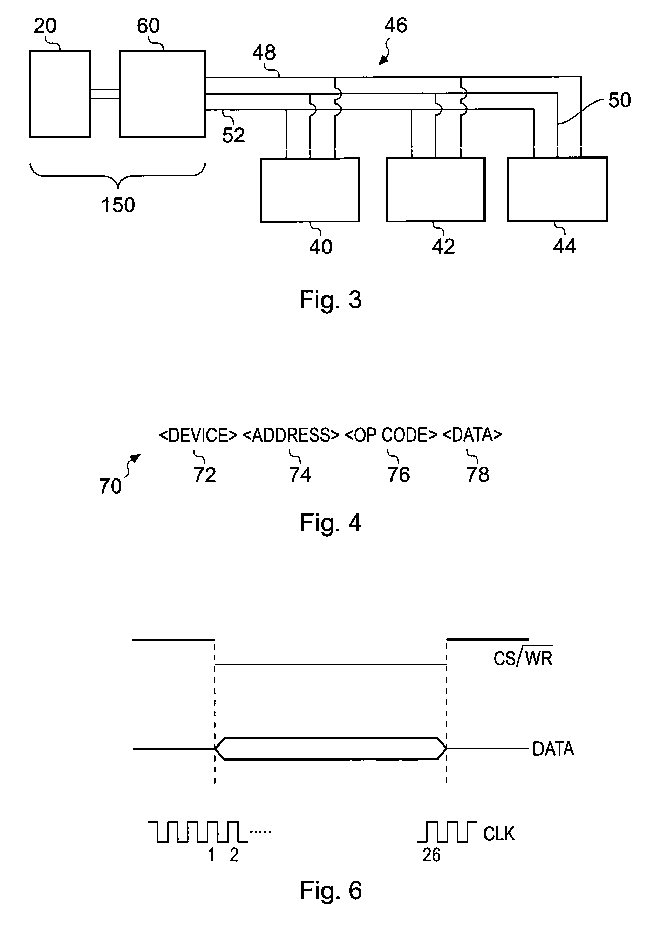

Figure 3 schematically illustrates a complex system, such as a dual mode, i.e. GSM and UMTS, mobile telephone. Such a mobile telephone may include a data processor 20 which is tasked with controlling a baseband section 40, a GSM section 42 and a UMTS/WCDMA section 44 of a mobile telephone. Each of the individual baseband, GSM and WCDMA/UMTS sections is provisioned with a data link, such as a serial interface, such that each of the sections 40, 42 and 44 can be connected to a common serial bus 46 with which the data processor 20 is in communication. The serial bus is preferably, though not necessarily, a three wire serial bus having a data line 48, a serial clock 50 and a chip select/w̅r̅i̅t̅e̅ e̅n̅a̅b̅l̅e̅ line 52. The logic for the chip select/w̅r̅i̅t̅e̅ e̅n̅a̅b̅l̅e̅ may have its logic inverted so that a write occurs on the transition of the line 52 to a logical 1 and the chip select occurs when the line transitions to a logical 0. The rising edges may be detected or the state of line 52 may be examined at clock transitions of the serial clock 50.

Within a mobile telephone many functions need to occur in order for the device to work properly. Amongst these functions are tasks such as transmit power setting, local oscillator setting, filter setting, gain setting in baseband stages, together with running a plurality of user applications which now occur on mobile telephones such as games, multimedia and the like. Responsibility for running these applications and co-ordinating these tasks falls on the data processor 20. However there are instances where the instantaneous work load on the data processor may become so high that it cannot issue control instructions to the subsystems 40, 42 and 44 at the correct times. In such circumstances the data processor has to prioritorise issuance of instructions and therefore some lower priority tasks may be missed completely. The workload for a data processor within a complex system, such as a mobile telephone is likely to be highly variable. This therefore gives rise to the possibility of using spare processing capacity during instances where the data processor is less busy in order to set up instructions to the subsystems 40, 42 and 44 as appropriate, for execution at a later time. However, this in itself only partially reduces the data processor workload as, in the prior art systems of Figures 1 and 2, the data processor is still responsible for issuing the write instructions to the systems under its control at the correct time. Therefore if an instruction has been pre-prepared, and the data processor is heavily loaded at the time that the instruction is due to be executed, then the data processor may not be able to devote execution time to sending the instruction to the appropriate sub system.

In order to facilitate the sending of instructions at the correct time, an embodiment of the invention has an instruction buffer generally designated 60 interposed between the data processor and the subsystems, and preferably between the data processor and the serial interface 46.

In order to control the various subsystems 40, 42 and 44 across the common serial interface, it is necessary for the data word propagated across the interface to contain various predefined fields. As multiple subsystems or devices are available or may be attached to the serial interface, it is advantageous that the first portion of a data word 70 contains a device identifier 72 (as illustrated in Figure 4) which indicates which of the subsystems is being addressed. Each subsystem will have various registers or memory locations within it, and consequently the data control word 70 also needs to contain an address field 74 for indicating which address or register within a given device is to be accessed. The next item in the data word is an operations code, often known as an OP code 76 which indicates the type of operation which is to be performed. The OP code may indicate whether a read or a write operation is being performed or whether a bit set or a bit clear operation is being performed. Finally the word 70 contains a data field 78. The data field 78 may in itself contain data to be written to an address or it may contain a mask. The use of a mask can be particularly advantageous where the individual bits within an address control different features of device and it is desired to change one of those bits whilst leaving the others intact.

Normally a single bit modify within a word would be performed by reading the word from the address back into the data processor, modifying one of the bits, and then writing the word back to the target device. However by use of a mask the status of the bits which are not to be changed does not need to be known and hence the read operation could be dispensed with. Instead the bit set or bit clear OP code can be sent and then the data mask could indicate which one or ones of the bits in the data word is to be operated on in accordance with the OP code. Thus the selected bits are either set or cleared whilst the other bits within the address remain unchanged from their previous state.

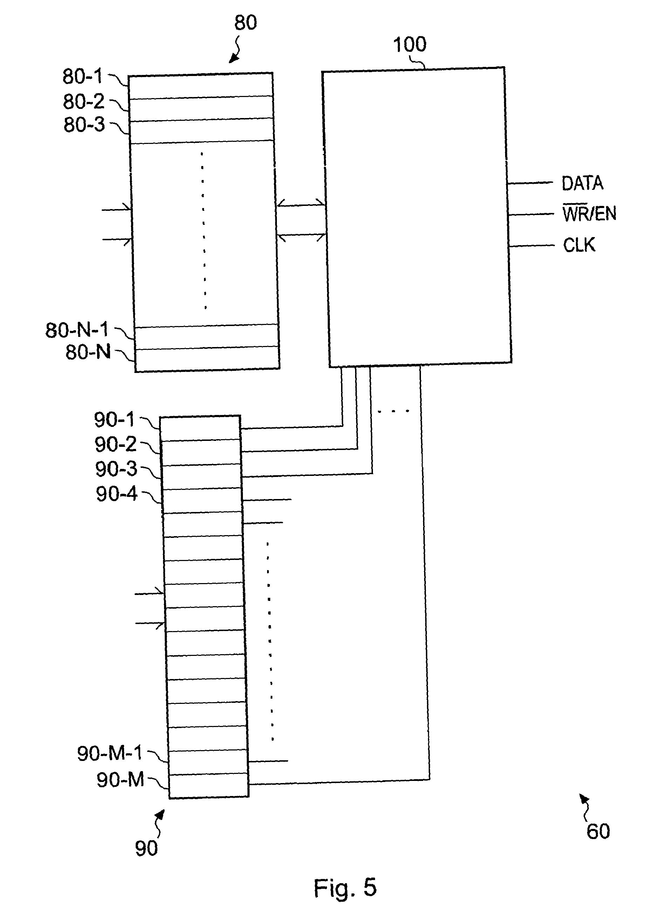

Figure 5 schematically illustrates the internal architecture of the instruction buffer 60. The buffer comprises an instruction store, generally designated 80 for storing instructions which have been received from the data processor 20. The instruction store 80 may be implemented as a series of buffers or may be a designated area of memory. The instruction store 80 preferably comprises a plurality of memory addresses, designated 80-1, 80-2, 80-3 ... 80-N - 1, 80-N.

The instruction buffer also comprises a counter timer unit, generally designated 90, which includes a plurality of individually settable counter/timers designated 90-1, 90-2, 90-3, 90-4, 90-M - 1, 90-M. It is advantageous, though not a necessary feature, that the number of timers M is equal to the number of memory locations N.

The instruction store 80 and the counter/timer 90 are in communication with an instruction dispatcher 100.

Each instruction within the instruction store 80 can be associated with a counter/timer within the counter timer unit 90. The instruction dispatcher is arranged to be responsive to the individual counter/timers 90-1 to 90-M such that when any one of the timers counts down to a time which had been loaded into it by the data processor, then it asserts an output to the instruction dispatcher 100 which causes the dispatcher 100 to retrieve the instruction from the relevant memory address 80-1 to 80-N within the instruction store 80 and to issue the instruction on the serial data bus. Therefore the data processor 20 does not have to undertake to issue the instruction itself at the relevant time.

In an embodiment of the present invention the data store 80 is 32 bits wide. 26 bits of the data store are allocated to the data word as described hereinbefore with respect to Figure 4. The remaining 6 bits within the data store are used by the data processor in order to control operation of the instruction buffer 60. Other data store widths and allocation of bits within the data store are possible.

One (or more) of the additional bits may be used as a flag for backward compatibility with older software running on the data processor. Therefore one of the bits may be used to indicate whether the instruction would be handled by the instructing unit 12 of the GSM mobile device shown in Figure 1 or would have been handled by the subsystem 14 of the prior art GSM device. A further four of the bits may be used as an address to indicate which one of the individual counter/timers is to be associated with this instruction. Therefore the number of addressable counters M could be as high as 16, but in this embodiment is limited to 15 such that the counter/timer address 0000 indicates that the instruction is for transfer to the serial bus on an expedited basis, that is as soon as possible. The final bit can be used to indicate whether the instruction is a read operation or a write operation. The association between counters and memory locations could be fixed within the instruction buffer such that the first counter 90-1 is always associated with the first memory address 80-1, the second counter to the second memory and so on. This is only a non-limiting example and other fixed allocations are possible. In alternative embodiments bits may be included (possibly to the exclusion of other bits) to indicate serial port type or other data transfer parameters.

One or more of the addressable counters can be loaded with an absolute time value which, once reached, causes the timer to issue an output, which can be regarded as a time strobe. Use of absolute time provides a high degree of certainty about the timing of events. However loading an absolute time, even if in a truncated format, might well be wasteful of memory. It is therefore possible in some embodiments that as the software executing on the data processor can have knowledge of the current time and hence can calculate the time that needs to elapse from the time it writes the instructions to the instruction buffer to the time that the instruction needs to be executed, that the software processor writes a delay time to the individual counter/timer and that this counter then counts down the delay time. This however is a less certain approach but may be acceptable in some systems.

Where timing requirements are particularly strict, such as in mobile telephones, it is preferable that the data processor should also take account of the "set up" time required to transmit the instruction on the serial data interface (assuming that the serial data interface is not busy) and optionally an internal processing time within the subsystem which is being instructed to change its operating state. Therefore, advantageously, the time period that is written into the counter/timer takes account of the set up time, i.e. by subtracting the set up time from the delay time, such that the data transfer process and internal reconfiguration of the subsystem can occur such that the operational change occurs substantially at the desired time.

The data processor 20 has access to both the individual memory locations within the instruction store 80 and the individual timers within the counter timer 90 such that it can set them both to the appropriate values in order to cause in instruction to be executed at a desired time.

Figure 6 is a timing diagram showing the transfer of data across the serial data bus. In order to perform a data write, the chip select/w̅r̅i̅t̅e̅ line is taken low. The serial clock may run continuously or may be enabled only when required for data transfer (inhibiting the clock can save power). Once the write enable has been asserted the serial data line transfers one bit of data per serial clock pulse. Therefore the 26 bit data packet is transferred in the total of 26 clock pulses. After the 26th pulse has finished the chip select/ w̅r̅i̅t̅e̅ line is taken high and the instructions are loaded into the selected subsystem at the next clock pulse. Therefore, even if the data processor is unaware of the precise set up time required by the subsystem or a slave device that it is writing to, it nevertheless can account for the fact that the data transfer will take 26 clock pulses from the serial data clock and an estimated transfer time can be used as the set up period and hence subtracted from the delay time which would otherwise have been calculated by the data processor, and this modified delay time (i.e. the delay time less the set up time) is then written into the counter timer. Some of the registers in the various sub-systems may have different word lengths. Suppose, for example, that a register in one of sections 40, 42 or 44 only requires ten bits of data to control it. The registers are arranged such that any number of bits of data in excess of the register length can be clocked to them, but only the last bits actually required by the register, e.g. last 10 bits in this example plus address and op-code are actually acted on. By sending the word such that any filler bits are sent first, then the data, then the op-code and finally the address we can ensure that the address and op-code always have a fixed location in the received word.

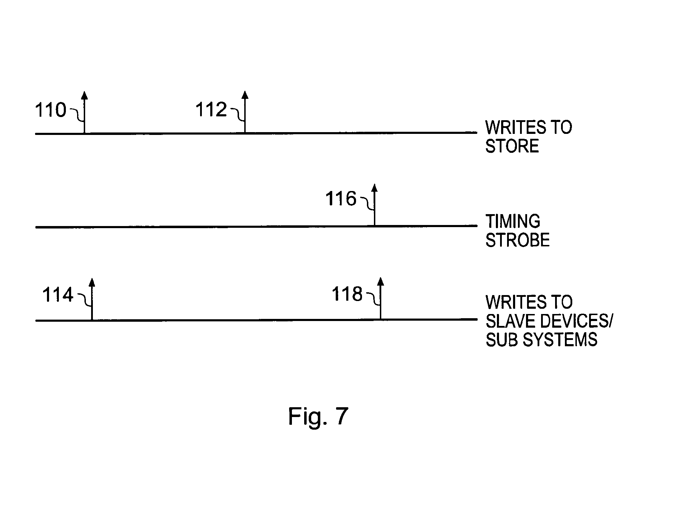

Figure 7 illustrates two examples of instruction writes from the data processor 20 via the instruction buffer 60. The instruction writes from the data processor 20 occur at the times designated 110 and 112, respectively.

For the data write 110 the data processor 20 sets the timer strobe code to "0000" indicating that the write from the instruction buffer to the designated subsystem should be immediate. The data dispatcher 100 is responsive to this code and writes the instruction at time 114 to the serial data bus as soon as possible i.e. as soon as the data bus becomes idle.

In the case of the second data write 112 the data processor sets the timer strobe to a value between "0001" and "1111" to indicate that the dispatcher 100 is to be responsive to a timing pulse/timing strobe from the counter/timer designated by the counter/timer address.

As part of the write process the data process also writes a delay value into the counter/timer indicative of the time period from the end of the write to the counter/timer that the timer should count down before asserting its strobe pulse. The counter/timer then counts down at a known rate until it reaches zero and then issues its timing strobe 116 to the data dispatcher 100. The dispatcher 100 then retrieves the instruction from the appropriate storage location within the data store 80 and writes the instructions to the serial data bus.

As noted hereinbefore, some instructions are more important than others. Whilst the software executing in the data processor should try to avoid issuing instructions that clash, it cannot always guarantee this because some of the systems operate in a closed loop and, for example, if it is determined by a transmit power monitor that the transmit power needs changing, then this must be done as a high priority. The transmit power monitor (or other system) may issue an interrupt to the data processor and hence the data processor is then required to suspend its current operational task and to handle the interrupt as a matter of priority and then to write that instruction to the instruction buffer. Given that the data processor would have no prior knowledge of when the interrupt was going to occur, then it cannot guarantee that two or more instructions will not need to be transmitted over the serial data bus at the same time.

In order to overcome this potential contention on the serial data bus, the instructions may be given relative priorities. The priority associated with an instruction could be explicitly designated by further extending the data word to include a priority value. However, more conveniently, the instructions can be implicitly prioritised within the data store. One end of the address range of the data store can be regarded as being a high priority end and the other end of the data store can be regarded as being a low priority end. Thus, referring to Figure 5, address 80-1 can be the address for the most important instruction and address 80-N can be the address for the least important instruction. All of the instructions that the data processor could write can then be assigned a target address within the data store that they will be written to. Therefore, in the event of any instruction contention the data dispatcher can pick the most important instruction from the data store 80 and send that in preference to any other contending instructions, i.e. instructions seeking to be transmitted next and at substantially the same time. The system designer can then decide whether the less important instructions are merely transmitted at a later time or whether the data dispatcher should write data back to the data processor indicating that the instruction has not been sent.

In such a scheme one could provide a specific address for each instruction that the data processor could send. Alternatively, given that it is highly unlikely that the data processor will issue every single instruction available to it near simultaneously, then the depth of the data store can be much smaller than the total number of instructions that the data processor could conceivably send and the data processor can be arranged to write each instruction that it wants to send to a default address within the data store in accordance with the relative priority of that instruction. However, if at the time of writing or prior to writing the instruction the data processor performs a further check to see whether an instruction is already pending in the target address within the instruction store 80, then it can modify the target address to, for example, write the instruction to the next available address within the data store having a lower priority than the default target priority. The very important instructions could be maintained on a one to one mapping to the addresses in the instruction store 80 thereby ensuring that the very important instructions are never demoted down the instruction list and are never brought into contention with other potential instructions trying to write to the same address within the instruction store 80.

It is thus possible to provide a mechanism such that transfer of any low priority instruction that is pending in the buffer can be interrupted or deferred by a higher priority request.

All of the entries within the instruction store 80 may be accessed by hardware or software. However, where direct memory access is supported for other devices than the controlling data processor, then these addresses are preferably tailored according to the relative importance of the process that can make the direct memory access. Generally, it would be expected that the addresses within the store 80 which would be accessed by direct memory access would be the lower priority ones. However, it would be possible, for some very important tasks to be executed by dedicated hardware and these tasks could be given access to high priority addresses if the system designer felt this appropriate.

As described thus far the dispatcher 100 merely coordinates timing of the instruction dispatches. However, the dispatcher could also provide instruction translation if it was desired to allow old software to be interoperable with more modem hardware having dissimilar instruction addresses and OP codes. Under such circumstances the instruction dispatcher 100 could also perform an instruction translation, for example by referring to a ROM to look up an "old" instruction which is to be replaced by a "new" instruction.

In some systems the serial data bus may support bi-directional communication. In such circumstances the instruction dispatcher may need to wait until the serial bus is idle before attempting to send instructions and/or may be given authority to signal to the slave devices that it is going to take command of the serial bus and that data writes from the subsystems should be suspended.

The instruction buffer may include dedicated hardware for monitoring the memory locations within the store 80 so as to maintain an indication of the most important instruction therein.

Once an instruction has started transmission on the databus the transmission must be completed before any other instructions can be transmitted. During this time one more further transmission instructions may become due and under these circumstances the instruction dispatcher prioritises the transmit requests and services them in order of priority as quickly as possible.

The data processor 20 and the instruction buffer co-operate to form an event controller 150 which causes instructions to be issued at specific times to the subsystems 40, 42, 44.

Given that the instruction store is internal to the instruction buffer 60, it is easy for the logic within the instruction dispatcher to read the bits that designate which one of the counter-timers 90-1 to 90M is associated with the instruction and to set a multiplexer to route the output of the timer to a circuit within the dispatcher which acts to place the instruction on the databus.

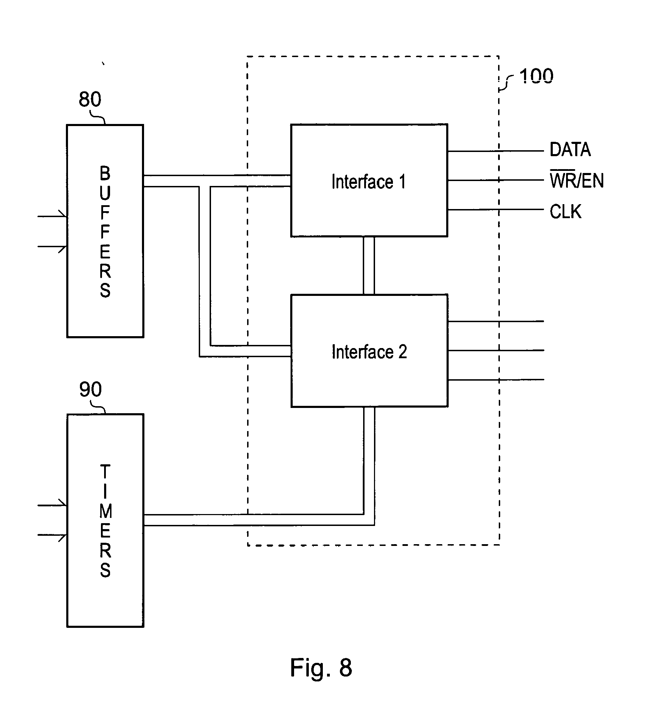

Although the invention has been discussed herein as only having a single serial interface, it can have two or more serial interfaces, as shown in Figure 8. Here interface 1 can issue instructions on a different databus to interface 2. Thus, different subsystems may be addressed by different interfaces. For example, the SYNTHPORT and CSPORT functionality of the GSM part of a dual mode device may be placed on different interfaces as these functions are controlled concurrently.

The interfaces, interface 1 and interface 2, can request data from the buffer. However, the buffer can also inform the interfaces when data is available (for example by virtue of an address not being empty). The dispatcher 100 acts to ensure that data is only requested from a buffer that contains data.

When the dispatcher or a serial interface therein requests data, the dispatcher can check for entries that have been flagged as ready to be transmitted.

If only one such entry is flagged for transmission it is read from the buffer by one of the serial interfaces, and that buffer entry is then cleared. The data is then transmitted by the serial interface. If two entries are ready to be sent, then they are sent in order of priority - unless they can be sent concurrently over different interfaces.

It is thus possible to provide a instruction buffer which provides enhanced timing control for writing instructions to slave devices or subsystems and which can also resolve conflicting requests for access to the serial data bus. The data processor in combination with the instruction buffer forms an event controller 150 (Figure 3) such that instructions can be issued to a controlled device with a expectation that the instruction will be sent such that the controlled device performs the task at a desired time.

## Claims

1. An instruction buffer **characterised by** comprising:
a store (80) for storing at least one instruction;
a timer (90) for issuing an indication that a specific instruction from the instruction store is due for execution;
and an instruction dispatcher (100) responsive to the timer (90) for accessing the store (80) to identify the instruction due for execution and for instructing a device responsive to the instruction buffer to execute the instruction.

2. An instruction buffer as claimed in claim 1, **characterised in that** a plurality of programmable timers (90-1, 90-m) are provided such that multiple instructions can be placed in the store (80) and arranged to be issued according to a schedule set in the timers.

3. An instruction buffer as claimed in claim 1 or 2, **characterised in that** the instruction dispatcher (100) is responsive to status signals from devices (40, 42, 44) responsive to the instruction dispatcher, so as only to send instructions to a specific device when the specific device indicates it is ready to accept an instruction.

4. An instruction buffer as claimed any of the preceding claims, **characterised in that** instructions can be marked for transfer by the instruction dispatcher to a specific device as soon as possible.

5. An instruction buffer as claimed in claim 4, **characterised in that** the instruction buffer, includes an indication of relative priorities of instructions therein, and sends an instruction having a higher priority in preference to instructions having a lower priority.

6. An instruction buffer as claimed in claim 5, **characterised in that** the priority associated with an instruction is explicit.

7. An instruction buffer as claimed in claim 5, **characterised in that** the priority associated with an instruction is implicit.

8. An instruction buffer as claimed in claim 7, **characterised in that** the priority associated with an instruction is implied from the position of the instruction within the store (80).

9. An instruction buffer as claimed in any of claims 5 to 8, **characterised in that** the buffer has an instruction searcher for maintaining an indication of the highest priority instruction therein.

10. An instruction buffer as claimed in any of the preceding claims, **characterised in that** a plurality of devices (40, 42, 44) are responsive to the instruction dispatcher (100), and where in the instruction placed in the store (80) comprises a device identifier so as to identify a target device, and at least one of an address to be written to, an OP code, a data word and a mask word.

11. An instruction buffer as claimed in any of the preceding claims, **characterised in that** the instruction dispatcher (100) is cognisant of the status of a communications bus and only seeks to send an instruction via the communications bus when the communications bus would otherwise be idle.

12. An instruction buffer as claimed in any of the preceding claims, **characterised in that** instruction can be written to the buffer by one or more devices, by a data processor (20), via direct memory access or via dedicated hardware.

13. A system having a controller and a plurality of sub-systems responsive to the controller, the system further including an instruction buffer as claimed in claim 1.

14. A mobile telecommunications device including an instruction buffer as claimed in any of the preceding claims.

15. An event controller for controlling a timing of a plurality of events that occur in one or more devices (40, 42, 44) responsive to the event controller and which are in communication with the event controller, wherein the event controller (150) is adapted to:
a. generate at least one instruction identifying an event and a commencement time for at least one event;
b. to estimate a set up time representative of a time delay between commencing to send an instruction to a selected device (40) and the selected device executing the instruction; and
c. to set a trigger time for issuing the instruction taking account of the set up time such that execution of the instruction starts in the selected device substantially at the commencement time.

16. An event controller as claimed in claim 15, wherein one or more of the following applies:
a) the instructions are generated by a data processor;
b) an estimate of set up time is made by a data processor;
c) the trigger time is a time period that is counted down following the generation of an instruction;
d) the event controller further comprises memory for storing instructions;
e) the event controller further comprises at least one counter for generating a timing signal to indicate that an instruction is to be operated upon; or
f) an interface for fetching an instruction from an instruction store and transmitting it on a data link.

17. A method of sending instructions from a controller to slave devices responsive to the controller, the method comprising:
placing instructions for the devices in an instruction store capable of storing a plurality of instructions;
setting a timer to issue an indication that a specific instruction in the instruction store is due for sending;
and in response to a signal from the timer retrieving the instruction from the instruction store and sending it to the slave device.

18. A method of controlling the execution of a plurality of events in a system comprising a plurality of sub-systems, the method comprising the steps of:
a. generating instructions identifying an event and a commencement time for the event;
b. setting a timer to issue a signal when the event should be initiated; and
c. in response to the timer sending instructions to initiate the event.
